# EUROPEAN PATENT APPLICATION

(11) **EP 4 369 575 A1**
(43) Date of publication of application: **15.05.2024**
(21) Application number: 22207136.7
(22) Date of filing: 14.11.2022
(51) Int. Cl.: H02K 7/102, H02K 7/18

(54) **GENERATOR FOR WIND TURBINE**

(71) Applicant: Siemens Gamesa Renewable Energy A/S, 7330 Brande (DK)
(72) Inventor: George, Ajoe, 686004 Kerala -India (IN); Gorti, Srihari prasad, 560100 Bengaluru, Karnataka (IN); Jayaraman, Saravanan, 7430 Ikast (DK); Jensen, Simon Vyff, 7160 Tørring (DK)
(74) Representative: SGRE-Association

(57) **Abstract**

The present invention relates to a wind turbine (1) comprising a wind rotor (5) with blades (3) and a generator (10) comprising a rotor (11) connected to the wind rotor (5), and a stator (12), where a sliding pad (50) is connected to the stator (12) and is positioned such if the rotor (11) tilts more than a critical angle relative to the stator (12) it contacts the sliding pad (50).

The invention further relates to the method to protect the generator accordingly.

## Description

### Field of invention

The present invention relates to the protection of the generator in wind turbines bey ensuring a minimum air gap between rotor and stator despite heavy load.

### Background

Generators, such as direct drive generators for wind turbines, operate with a relatively small airgap between the rotor and the stator. The rotor and the stator include permanent magnets, electromagnetic windings, combinations thereof, or other magnetic devices arranged to provide a magnetic flux across the airgap sufficient to generate electricity.

It is desirable to have as small an airgap as the magnetic force is inversely related to the square of the distance between rotor and stator. Decreasing the size of the airgap increases the magnetizing current, which is the amount of current needed to drive the magnetic flux through the air gap. The greater the number of poles on the generator, the greater the number of times the flux must cross the air gap for each revolution.

The weight of elements like the blades and the wind rotor itself is however substantial and tend to drag the parts downwards by gravity when mounted.

The risk under substantial wind loads, however, is that the rotor and stator would come in direct contact damaging the generator.

The airgap therefore needs to be maintained at a sufficient size to avoid the risk of contact.

The present invention relates to increase efficiency by allowing the introduction of a smaller airgap.

### Summary

The object of the invention is solved according to the features and methods indicated in the claims.

This includes introducing a wind turbine comprising a wind rotor with blades and a generator, the generator comprising a rotor connected to the wind rotor and a stator, wherein a sliding pad is connected to the stator and is positioned such that, if the rotor tilts more than a critical angle relative to the stator it contacts the sliding pad.

The sliding pad may be positioned on a mounting section for frictional members adapted to break the rotor.

The sliding pad may be positioned on a curving outer edge surface of the mounting section.

The sliding pad may be positioned to contact an inner edge surface of a break disc of the rotor.

The sliding pad may be positioned in relation to frictional members adapted to break the rotor.

The frictional members may be formed as callipers and the sliding pad may be positioned on the inner surface of a calliper adapted to form the frictional contact to the rotor.

In an embodiment a surface of the break disc at the edge is formed with a sliding surface.

The sliding pads may be exchangeable.

The sliding pads may be fixedly connected to the outer edge surface, such as by welding or brazing.

The sliding pad may be formed of grey cast iron.

The present invention further relates to a method to protect a generator in a wind turbine comprising a wind rotor with blades from mechanical damage during high loads, where the generator comprises a rotor connected to the wind rotor and a stator, the method including to position a sliding pad in connection to the stator such that if the rotor tilts more than a critical angle relative to the stator it contacts the sliding pad.

The method may be used for any of the embodiments above.

### Brief Description of the Drawings

- Figure 1: shows a schematic presentation of a general wind turbine
- Figure 2A: shows a schematic presentation of a generator with fixed stator and a rotor connected to a wind rotor.
- Figure 2B: shows a schematic presentation the generator rotor tilting relative to the fixed stator under influence of gravity and load on the wind rotor.
- Figure 3: shows a schematic presentation of the rotor within the generator when installed concentric, respectively also showing the effect of gravity and load
- Figure 4: shows the effect of different azimuth angles of the blades to the concentricity of the rotor relative to the stator.
- Figure 5: shows a generator for a wind turbine with a braking system comprising a break disc and frictional members.
- Figure 6: shows the break disc and frictional members.
- Figs. 7A and 7b: shows a mounting section for a frictional member where fig. 7B shows an embodiment of the present invention where the outer edge surface of the mounting section provides a sliding pad 50.
- Figs. 8A and 8B: shows the break disc within the frictional members formed of callipers.
- Figure 9: shows a tilt of the break disc within the frictional members due to gravity and load.
- Figs. 10A and 10B: shows an embodiment of the invention where sliding pads are positioned at the inner surface of the callipers of the frictional members.
- Figure 11: shows an embodiment where the edge of the break disc is formed with a sliding surface.
- Figure 12: shows a flow chart of the method according to the present invention

### Detailed Description

The illustrations in the drawings are schematic. It is noted that in different figures, similar or identical elements are provided with the same reference signs.

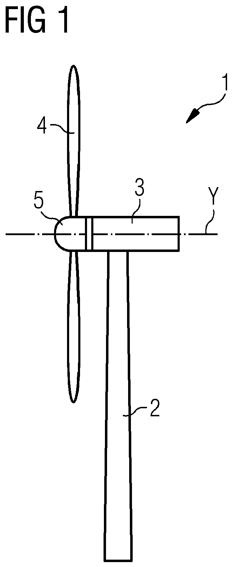

**Figure 1** shows an embodiment wind turbine 1 positioned in the water, such as the ocean. The wind turbine 1 comprises a tower 2 mounted on a non-depicted fundament. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a longitudinal rotation axis Y. The wind turbine 1 comprises an electric generator.

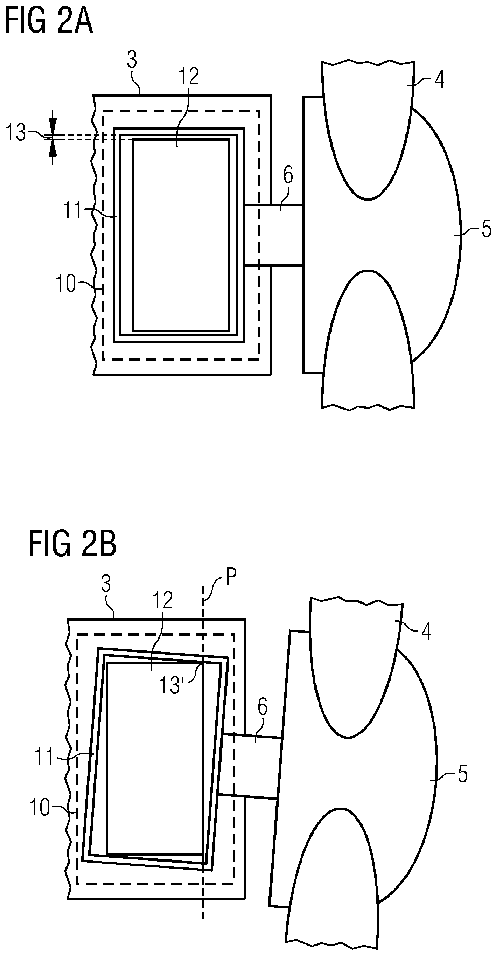

**Figure 2A** illustrates a generator 10 comprising a rotor 11 connected to the wind rotor 5, and a stator 12 fixedly positioned within the nacelle 3. In the illustrated embodiment the wind turbine 1 is a direct drive wind turbine where the wind rotor 5 is directly connected to the generator 10, without any gearbox arranged in between. The rotation of the blades 4 due to the wind is directly transmitted to the generator 10 via a shaft 6 connected to the wind rotor 5. When the wind turbine 10 is in operation, the generator 10 converts wind energy into electrical energy.

A small airgap 13 exists between the rotor 11 and the stator 12. The rotor 11 and the stator 12 include permanent magnets, electromagnetic windings, combinations thereof, or other magnetic devices arranged to provide a magnetic flux across the airgap 13 sufficient to generate electricity.

The weight of elements like the blades 4 and the wind rotor 5 itself is however substantial, and when mounted gravity tend to drag the elements downwards, as also illustrated in figure 2B.

In the illustration the stator 12 is substantially concentric relative to the rotor 11, the two parts extending essentially in parallel.

It is desirable to have as small an airgap 13 as the magnetic force is inversely related to the square of the distance between rotor 11 and stator 11. Decreasing the size of the airgap 13 increases the magnetizing current being the amount of current needed to drive the magnetic flux through the air gap. The greater the number of poles on the generator, the greater the number of times the flux must cross the air gap for each revolution.

However, having a small airgap 13 (possible in the order of millimeters or a few centimeters), this quickly forms a problem when the rotor 11 tilts relative to the stator. This is also illustrated in figure 2B showing that the airgap 13 is changed as the rotor 11 tilts slightly relative to the stator 12.

In the present context, and as illustrated in fig. 2B, the rotor 11 tilts negatively relative to the stator 12, where a negative tilt in the present is defined as the direction of tilt as is induced by gravity.

This leads to a reduced airgap 13', which may be close to zero, or zero, such that the part touches.

In the present the reduced airgap 13' is defined as being the minimum airgap 13 in the circumference of the stator 12 seen in the plane P of the end phase of the stator 12 proximal to the wind rotor 5.

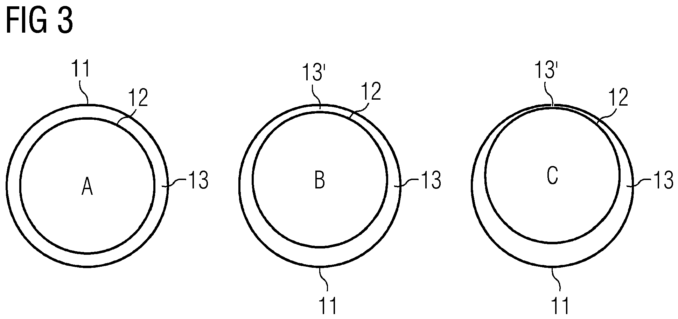

**Figure 3** illustrates how the generators 10 in present systems are assembled with a substantially concentric nominal airgap 13 (A).

A further reduction of the reduced airgap 13' is expected due to wind loads (C).

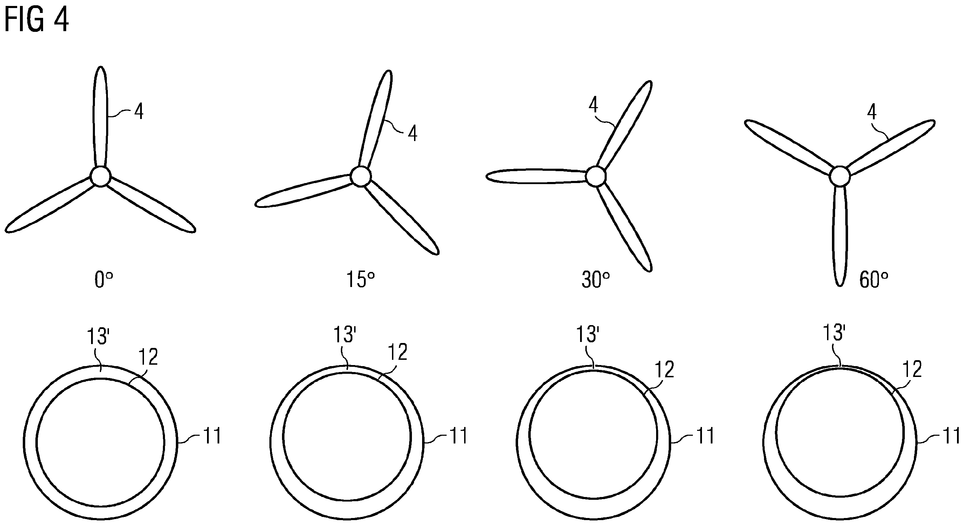

**Figure 4** illustrates the reduced airgap 13' under load at different blade 4 positions, 0°, 15°, 30°, 60°, where the angles of rotation are defined in a clockwise rotation relative to an upper blade4, such that an upper blade 4 rotation of 0° corresponds to the blade 4 in azimuth position pointing straight upwards.

As can be seen, the reduced airgap 13' under load is largest at 0° angle but is then continuously reduced at rotations until a rotation of 60° where one of the blades 4 are pointing straight downwards.

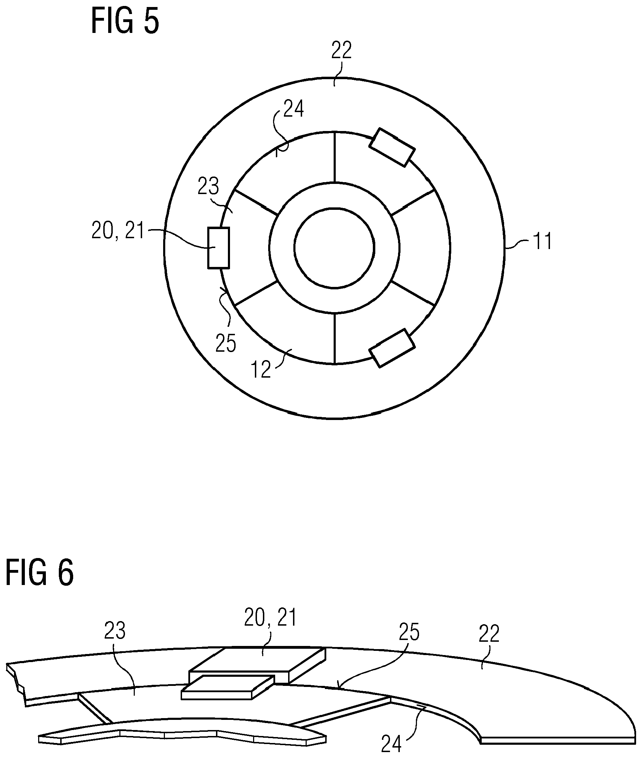

To break the wind turbine 1, the stator 12 further comprises a frictional member 20, which in an embodiment as illustrated in **figure 5** is a brake calliper 21 system. The brake calliper 21 system is operatively configured for frictionally engaging at least a portion of a brake disc 22. The brake calliper 21 system extends radially outward from a stationary shaft forming mounting sections 23 to the brake disc 22 and comprises at least one brake calliper on each side of the brake disc 22 to enclose it.

The embodiment of **figure 5** illustrates braking system for generators 10 in wind turbines 1 comprising rotor 11 formed with a brake disc 22. The frame of the stator 12 forms one or more brake mounting sections 21 on which is mounted calliper brakes 21 adapted to interact with the brake disc 22 partly enclosing it over the inner edge surface 24 of the brake disc 2

The brake mounting sections 23 of the stator 12 frame are spaced apart from each other along a circumferential direction.

In the embodiment, the outer edge surface 25 of the mounting sections 23 face the inner edge surface 24 of the brake disc 22, and in nominal state a radial distance 13", or airgap, will exist between them.

The airgap 13" between the brake disc 22 outer edge surface 25 and the brake calliper is less than the nominal air gap 13 between the rotor 11 and the stator 12.

**Figure 6** is a closer view of the brake calliper 21 system and its position on mounting sections 23 and in connection to the brake disc 22.

The mounting section 23 outer edge surface 25 is adapted to face the inner edge surface 24 of the brake disc 22 and may be shaped accordingly, e.g. matching the curvature of the inner edge surface 24. This in a situation with absent gravity and load would give a substantially constant airgap 13" between the outer edge surface 25 inner edge surface 24.

As the nominal airgap 13" between the mounting section 23 outer edge surface 25 and the inner edge surface 24 of the brake disc 22 may be smaller than the gap between the rotor 11 and stator 12. In a situation with substantially high loads, where the rotor 11 potentially could risk contacting the stator 12 forming damage to the system, the inner edge surface 25 of the break disc 22 would first contact the inner edge surface 24 of the brake disc 22.

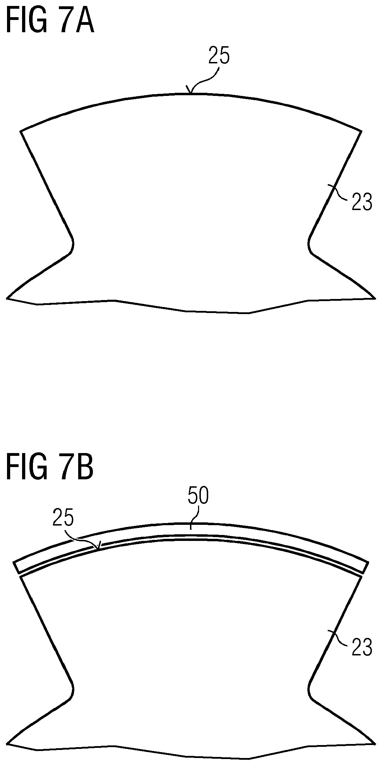

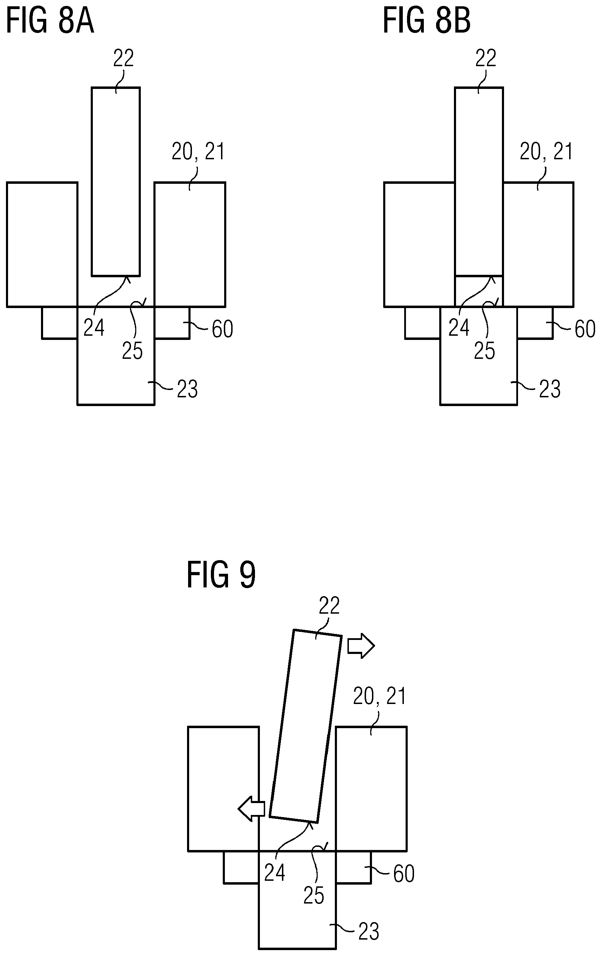

**Figure 7A** is an illustration of a mounting section 23 showing the curvature of the upper edge, and figure 8B shows a sliding pad 50 positioned at the outer edge surface 25 of the mounting sections 23.

In one embodiment, as illustrated in **figure 7B****,** the sliding pads 50 are exchangeable, e.g. to be exchanged during ordinary service checks. In another embodiment the sliding pads 50 are fixedly connected to the outer edge surface 25, such as by welding or brazing, or by a mechanical solution like a dovetail, countersunk bolts or similar.

The sliding pads 50 are formed of a material suitable and sufficiently thick for the sliding pad 50 to prevent damage to the outer edge surface 25, and as such to the mounting sections 23. The sliding pads 50 at the same time are formed of a material suitable during extreme events to allow brake disc 22 to touch and slide on the surface of the sliding pad 50, preferably with a substantially low friction.

The sliding pads 50 thereby forms a protection of the airgap 13 and ensures the rotor 11 never touch the stator 12.

**Figures 8A and 8B** are illustrations of the mounting sections 23 and braking callipers 21 seen formed of two parts adapted to clamp at both sides of the brake disc 22.

**Figure 8A** is an illustration of the mounting sections 23 and braking callipers seen from the front with the outer edge of the brake disc 22 positioned inside the calliper system 20, where actuating elements 60 is adapted to squeeze the clipper 21 onto the side of the brake disc 22 to stop or break it by friction, as also seen in **figure 8B****.**

**Figure 9** corresponds to the situation of load (and gravity) of figure 2B, where the tilt also manifests in a tilting of the brake disc 22 relative to the calliper 21.

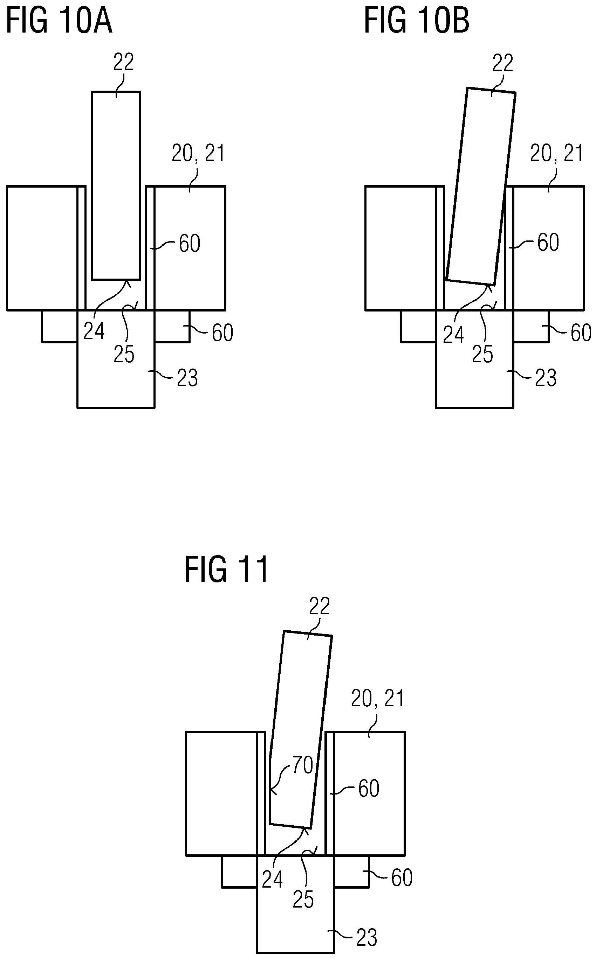

In an alternative, or additional embodiment, this is used to position a sliding pad 50 at the inner surfaces of the calliper 21, as also illustrated in **figure 10A. Figure 10B** illustrates the tilting situation where the break disc 22 contacts and slides on the sliding pad 50 rather than directly at the inner surface of the calliper 21 itself.

Again, in one embodiment the sliding pads 50 are exchangeable, e.g. to be exchanged during ordinary service checks. In another embodiment the sliding pads 50 are fixedly connected to the outer edge surface 25, such as by welding or brazing, or by a mechanical solution like a dovetail, countersunk bolts or similar.

**Figure 11** illustrates a related version of the embodiment according to fig. 10A and 10B, where at least one surface of the break disc (22) is formed at the edge with a sliding surface 70. The sliding surface 70 is formed such that when the break disc 22 tilts at an angle corresponding to contacting the inner sliding pads 50 it, rather than contacting by an edge, contacts over an area, the sliding surface 70 being parallel to the sliding pad 50.

In general, any of the embodiments above could be alternatives to each other or could be introduced in combination.

In any of the embodiments the sliding pads 50 could be made of iron like grey cast iron, stainless steel etc.

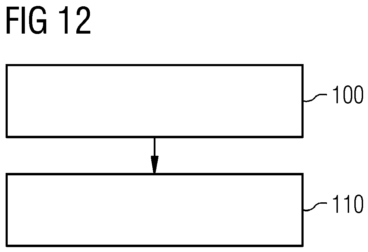

Figure 12 illustrates the method according to the present invention. A first step 100 is to provide a generator (10) comprising a rotor (11) connected to the wind rotor (5) and a stator (12).

Secondly 110 to position the generator with the stator in connection to a sliding pad (50), such that if the rotor (11) tilts more than a critical angle relative to the stator (12) it contacts the sliding pad (50).

## Claims

1. Wind turbine (1) comprising a wind rotor (5) with blades (3) and a generator (10), the generator (10) comprising a rotor (11) connected to the wind rotor (5), and a stator (12), **characterized in that**, a sliding pad (50) is connected to the stator (12) and is positioned such that, if the rotor (11) tilts more than a critical angle relative to the stator (12) it contacts the sliding pad (50).

2. Wind turbine (1) according to claim 1, wherein the sliding pad (50) is positioned on a mounting section (23) for frictional members (20) adapted to break the rotor (11).

3. Wind turbine (1) according to claim 2, wherein the sliding pad (50) is positioned on a curving outer edge surface (5) of the mounting section (23).

4. Wind turbine (1) according to claim 2 or 3, wherein the sliding pad (50) is positioned to contact an inner edge surface (24) of a break disc (22) of the rotor (11).

5. Wind turbine (1) according to claim 1, wherein the sliding pad (50) is positioned in relation to frictional members (20) adapted to break the rotor (11).

6. Wind turbine (1) according to claim 5, wherein frictional members (20) are formed as callipers (21) and the sliding pad (50) is positioned on the inner surface of a calliper (21) adapted to form the frictional contact to the rotor (11) .

7. Wind turbine (1) according to claim 5 or 6, wherein where a surface of the break disc (22) at the edge is formed with a sliding surface 70.

8. Wind turbine (1) according to any of the previous claims, wherein the sliding pads 50 are exchangeable.

9. Wind turbine (1) according any of claims 1-7, wherein the sliding pads (50) fixedly connected to the outer edge surface (25), such as by welding or brazing, or by a mechanical solution like a dovetail, countersunk bolts or similar.

10. Wind turbine (1) according to any of the previous claims, wherein the sliding pad (50) is formed of grey cast iron.

11. Method to protect a generator (10) in a wind turbine (1) comprising a wind rotor (5) with blades (3) from mechanical damage during high loads, where the generator (10) comprises a rotor (11) connected to the wind rotor (5) and a stator (12), the method including to position a sliding pad (50) in connection to the stator (12) such that if the rotor (11) tilts more than a critical angle relative to the stator (12) it contacts the sliding pad (50).

12. Method to protect a generator (10) in a wind turbine (1) according to claim 12 and used on the wind turbine (1) according to any of the claims 1-10.
